# EUROPÄISCHE PATENTANMELDUNG

(11) **EP 2 423 457 A2**
(43) Veröffentlichungstag der Anmeldung: **29.02.2012**
(21) Anmeldenummer: 10001301.0
(22) Anmeldetag: 09.02.2010
(51) Int. Cl.: F01K 7/22, F01K 23/06

(54) **Kraftwerk für IGSC-Prozess**

(30) Priorität: 23.03.2009 DE 102009014447
(71) Anmelder: MAN Diesel & Turbo SE, 86153 Augsburg (DE)
(72) Erfinder: Gericke, Bernd, 51067 Köln (DE)

(57) **Zusammenfassung**

In einem Kraftwerk mit einer Kohlevergasungseinrichtung (1) zum Vergasen von Kohle (K), insbesondere mit einer Wassereindüsung (W); einer Gasverbrennungseinrichtung, insbesondere einem CES-Brenner (2), zur Verbrennung von, insbesondere gereinigtem, Synthesegas aus der Kohlevergasungseinrichtung (1); einem Heißgasexpander (3) zur Erzeugung von nutzbarer Abtriebsleistung unter Expansion von Rauchgas (RG) aus der Gasverbrennungseinrichtung; einem Dampferzeuger, insbesondere ein Abhitze-Dampferzeuger, (4) zur Erwärmung, insbesondere zur Verdampfung und/oder Überhitzung von Speisewasser (SPW) durch Abwärme des expandierten Rauchgases; einem Dampfturbinensatz mit wenigstens einer ersten Stufe (HD) zur Entspannung von Dampf, insbesondere Hochdruck-Dampf, aus dem Dampferzeuger; und einem Zwischenüberhitzer (ZÜ), der nach der ersten Stufe des Dampfturbinensatzes angeordnet ist und von dem expandierten Rauchgas durchströmt wird; wird durch eine Drosseleinrichtung für Festdruckbetrieb auf der Hochdruck HD) -Seite die kalte Schiene des Zwischenüberhitzers (ZÜ) angedrosselt bzw. für Gleichdruckbetrieb auf der Hochdruck (HD) -Seite über ein Umformventil die Dampfparameter für die kalte Zwischenüberhitzer-Schiene erreicht werden.

## Beschreibung

Die Erfindung betrifft ein Kraftwerk nach dem Oberbegriff des Anspruchs 1, ein Verfahren zum Betrieb eines solchen Kraftwerks sowie die Verwendung einzelner Komponenten eines solchen Kraftwerkes.

Die umwelttechnischen und wirtschaftlichen Anforderungen an Kraftwerke, wie sie beispielsweise in der DE 101 55 508 C5 und DE 198 29 088 C2 beschrieben sind, steigen beständig an. Insbesondere zur Reduzierung von Kohlendioxid existieren zwei theoretische Konzepte: zum einen die Erhöhung des Prozesswirkungsgrades, zum anderen die Abtrennung von Kohlendioxid (CO₂) aus dem Kraftwerksprozess und seine Weiterverwendung.

Mit den zur Verfügung stehenden erprobten und kostengünstigen Elementen bietet sich derzeit nur die CO₂-Abtrennung an. Dazu ist einerseits der IGCC-Prozess bekannt, bei dem die im Rohgas enthaltenen kohlespezifischen Schadstoffe wie H₂S, COS, NH₃, HCN und dergleichen bereits vor der Verbrennung in einer Gasturbine in einem speziellen Reinigungsprozess entfernt werden. Im Rohgas enthaltenes Kohlenmonoxid wird über einen weiteren Prozessschritt, den sogenannten CO-Shift, in Wasserstoff und CO₂ umgewandelt, welches vor der Verbrennung abgeschieden wird. Diese Abscheideprozesse erfordern einen hohen apparativen Aufwand.

Neben dem IGCC-Prozess ist, beispielsweise aus der DE 10 2005 026 534 A1, der Oxy-Fuel-Prozess bekannt, bei dem die Verbrennung mit reinem Sauerstoff erfolgt und das CO₂ in einer Rauchgaskondensation abgetrennt wird.

Der beispielsweise aus den Artikeln "Lose the carbon, not your capacity", tcetoday, Dez. 2008/Jan. 2009, Seiten 43-44 und "Competition hots up in the UK...", Modern Power Systems, Mai 2008, S. 30 bekannte "Integrated Gasification Simple Cylce" (IGSC-Prozess) vereint die Vorteile von IGCC- und Oxy-Fuel-Prozess.

Jedoch erfordern der hohe SO₂- und Wasserdampf-Partialdruck bei hohem Gasdruck wegen des dadurch bedingten erhöhten Säuretaupunktes eine lastunabhängige konstante Speisewassertemperatur am Eintritt des Kessels. Dies schränkt die Flexibilität beim Betrieb des Kraftwerks erheblich ein. Da mit fallender Last die Speisewassertemperatur unter den Säuretaupunkt fällt, muss das Kraftwerk bislang ständig im Volllastpunkt betrieben werden.

Aufgabe der vorliegenden Erfindung ist es daher, den bekannten Kraftwerksprozess zu verbessern.

Zur Lösung dieser Aufgabe ist ein Kraftwerk nach dem Oberbegriff des Anspruchs 1 durch dessen kennzeichnenden Merkmale weitergebildet. Anspruch 13 stellt ein Verfahren zum Betrieb eines solchen Kraftwerks unter Schutz. Die Unteransprüche betreffen vorteilhafte Weiterbildungen sowie die erfindungsgemäße Verwendung einzelner Komponenten eines Kraftwerkes nach einer Ausführung der vorliegenden Erfindung.

Erfindungsgemäß wird vorgeschlagen, für Anlagen die im Festdruck auf der Hochdruck (HD) -Seite betrieben werden die kalte Schiene eines Zwischenüberhitzers durch Androsseln auf im Wesentlichen konstantem Druck zu halten. Dadurch kann die Speisewassertemperatur über einen Speisewasser / Dampf Wärmetauscher der von der kalten Zwischenüberhitzer Schiene "h" gespeist wird über dem Schwefelsäuretaupunkt gehalten werden. Der Erfindungsvorschlag richtet sich vorzugsweise auf Anlagen die im Festdruck auf der Hochdruck (HD) -Seite betrieben werden.

Durch die Drosselung auf der heißen Schiene des Zwischenüberhitzers kann mit fallender Last der elektrische Wirkungsgrad sinken, da die Expansionslinie auf der Hochdruckseite künstlich reduziert wird. Ebenso kann die Temperatur der kalten Schiene des Zwischenüberhitzers mit fallender Last ansteigen. Dies bedingt veränderte Wärmeübertragungsbedingungen für den Zwischenüberhitzer im Kessel.

Bei Gleitdruck-Anlagen wird vor dem Hochdruck (HD) -Teil der Dampfturbine solch ein Teilstrom bei "e" entnommen, um über ein Umformventil die Bedingungen für den Entnahmepunkt "h" zu gewährleisten.

Ein erfindungsgemäßes Kraftwerk umfasst eine Kohlevergasungseinrichtung zum Vergasen von Kohle, insbesondere mittels Sauerstoff, beispielsweise durch General Electric-Flugstromvergasung (früher Texaco), Shell-Flugstromvergasung oder dem ehemaligen GSP-Verfahren. Vorzugsweise erfolgt eine Quenchung durch Wassereindüsung, wobei in einer bevorzugten Ausführung die Abwärme wenigstens teilweise genutzt werden kann.

Das, vorzugsweise gereinigte, Synthesegas aus der Kohlevergasungseinrichtung wird in einer Gasverbrennungseinrichtung, insbesondere einem CES-Brenner mit Sauerstoff verbrannt.

Das entstehende Rauchgas wird in einem Heißgasexpander entspannt, dessen Abtriebsleistung genutzt, insbesondere durch einen Generator in elektrische Energie umgewandelt werden kann. Die Eintrittstemperatur kann vorteilhafterweise durch Wassereindüsung in die Gasverbrennungseinrichtung gesteuert bzw. - regelt werden.

Das Abwärmepotential des entspannten Rauchgases wird in einem Dampferzeuger zur Erwärmung, insbesondere zur Verdampfung und/oder Überhitzung von Speisewasser für eine Dampfturbine genutzt.

Nach einem Zwischenüberhitzer, der nach einer ersten Stufe der Dampfturbine angeordnet ist, von dem expandierten Rauchgas durchströmt wird und mit dem Dampferzeuger in einem Abhitzekessel integriert sein kann, ist erfindungsgemäß eine Drosseleinrichtung vorgesehen, um die kalte, ablaufende Schiene des Zwischenüberhitzers anzudrosseln. Dadurch kann die Speisewassertemperatur über dem Schwefelsäuretaupunkt gehalten werden. Alternativ kann auch eine Dampfentnahme vor dem Hochdruck (HD) -Teil mit einem Umformventil vorgesehen sein.

Bevorzugt weist die Dampfturbine wenigstens eine zweite Stufe zur weiteren Entspannung von Dampf aus der vorhergehenden Stufe auf. Dann kann der Zwischenüberhitzer und/oder die Drosseleinrichtung zwischen der ersten und zweiten Stufe dieses Dampfturbinensatzes angeordnet werden.

Das Rauchgas kann dann in einem Rauchgaskondensator, beispielsweise in einem ORC-Kreislauf, kondensiert werden.

Es ist ein Kühl-Kompressor zum Komprimieren einer Teilmenge des Kohlendioxid-Gases aus dem Rauchgaskondensator vorgesehen, der mit dem Heißgasexpander verbunden ist, um dessen Beschaufelung zu kühlen. Der Rest des CO₂-Gases wird in einem zusätzlichen Kompressor verdichtet und beispielsweise zur Steigerung der Ölproduktion Ölfeldern zugeführt werden (EOR - Enhanced Oil Recovery).

Die Abtriebsleistung eines von dem Rauchgaskondensator beschickten Kältemittel-Expanders (z.B. NH₃ als Kältemittel) kann beispielsweise durch einen Generator und/oder zum Antrieb der vorgenannten CO₂-Kompressoren genutzt werden.

In einer Sauerstoff-Zufuhr für die Kohlevergasungseinrichtung und/oder die Gasverbrennungseinrichtung können ein oder mehrere Kompressoren zur Luftzerlegung bzw. Sauerstoffgewinnung vorgesehen sein.

Weitere Vorteile und Merkmale ergeben sich aus den Unteransprüchen und den bevorzugten Ausführungsbeispielen. Hierzu zeigt, teilweise schematisiert:

| | |
|---|---|
| Fig. 1: | ein Kraftwerk nach einer Ausführung der vorliegenden Erfindung; und |
| Fig. 2: | den Abhitzekessel der Fig. 1. |

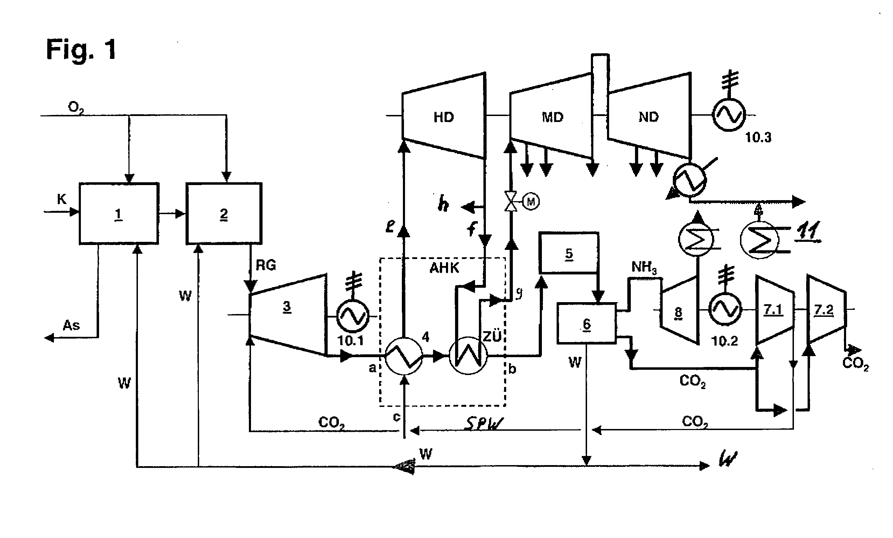

Fig. 1 zeigt ein Kraftwerk nach einer Ausführung der vorliegenden Erfindung sowie den darin ablaufenden Prozess.

In einer Kohlevergasungseinrichtung 1 wird Kohle K unter Eindüsung von Dampf und Zufuhr von Sauerstoff O₂ vergast und die entstehenden flüssigen Aschteilchen durch Eindüsung vom Wasser W gequencht und die dadurch entstandenen kristalline Asche As abgeführt.

Das gereinigte Synthesegas wird einem CES-Brenner 2 zugeführt und dort unter Zufuhr von Sauerstoff O₂ und Eindüsung von Wasser W verbrannt.

Hierbei entstehendes Rauchgas RG, welches unter anderem Wasserdampf H₂O, Kohlendioxid CO₂ und Schwefeloxide SO₂, bzw. SO₃ enthält, wird in einem Heißgasexpander 3 entspannt, dessen Abtriebsleistung in einem Generator 10.1 in elektrische Energie umgewandelt wird.

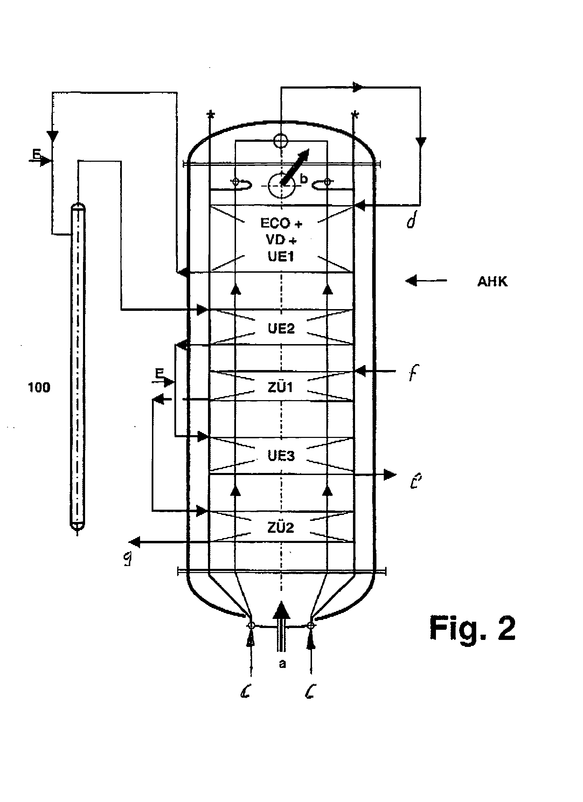

Das entspannte Rauchgas RG tritt in "a" in einen Abhitzekessel AHK ein, der in Fig. 2 vereinzelt dargestellt ist. Er umfasst einen in Fig. 1 mit "4" bezeichneten Dampferzeuger zur Verdampfung und Überhitzung von Speisewasser W durch Abwärme des expandierten Rauchgases sowie einen in Fig. 1 mit "ZÜ" bezeichneten Zwischenüberhitzer.

Wie die Einzeldarstellung der Fig. 2 zeigt, tritt Speisewasser bei "c" in den Abhitzekessel AHK ein, durchströmt die Tragrohre und Wände des Käfigs und wird in einer ersten Stufe ECO+VD+UE1 des Dampferzeugers 4 verdampft und überhitzt, durch eine Abscheideflasche 100 geleitet und anschließend in zwei weiteren Stufen UE2, UE3 des Dampferzeugers 4 weiter überhitzt, bevor es den Abhitzekessel AHK bei "e" als überhitzter Dampf verlässt.

Dieser Dampf durchströmt eine erste Stufe HD eines Dampfturbinensatzes und tritt anschließend bei "f" in den zweistufigen Zwischenüberhitzer ZÜ mit den Stufen ZÜ1, ZÜ2 ein, aus denen er bei "g" wieder austritt.

Nachdem das bei "a" in den Abhitzekessel AHK eintretende Rauchgas RG in den Stufen ECO+VD+UE1, UE2 und UE3 des Dampferzeugers 4 und ZÜ1, ZÜ2 des Zwischenüberhitzers ZÜ Wärme abgegeben hat, tritt es bei "b" aus dem Abhitzekessel AHK aus. Es wird in einer Entschwefelungseinrichtung 5 mit einer druckaufgeladenen zirkulierenden Wirbelschicht entschwefelt und anschließend in einem Rauchgaskondensator 6 fast vollständig kondensiert.

Das im Rauchgaskondensator 6 anfallende Wasser W an, wird dem Kreislauf der Kohlevergasungseinrichtung 1 und dem CES-Brenner 2 zugeführt. Zum anderen fällt Kohlendioxid CO₂ an, welches teilweise in einem Kühlkompressor 7.1, teilweise in einem weiteren Kompressor 7.2 verdichtet wird. Das CO₂ aus dem Kühlkompressor 7.1 wird zur Kühlung der Beschaufelung dem Heißgasexpander 3 zugeführt, das CO₂ aus dem weiteren Kompressor 7.2 zur Steigerung der Ölproduktion Ölfeldern zugeführt.

In dem Rauchgaskondensator 6 wird das durch Wärmeübertragung anfallende Kältemittel, z.B. Ammoniak NH₃, in einem Expander 8 entspannt, dessen Antriebswelle nicht nur einen Generator 102, sondern auch die beiden Kompressoren 7.1, 7.2 anreibt.

Hochdruck-Dampf aus dem Dampferzeuger 4 des Abhitzekessels AHK wird in einer ersten Stufe HD eines Dampfturbinensatzes entspannt und bei "f" in die kalte Schiene des Zwischenüberhitzers ZÜ des Abhitzekessels AHK eingespeist. Nach Wärmetausch mit dem Rauchgas verlässt der Dampf den Abhitzekessel AHK bei "g" und wird in einer Drosseleinrichtung, beispielsweise einem Regelventil M gedrosselt. Von dort strömt er in eine zweite Stufe MD und von dort teilweise in eine dritte Stufe ND des Dampfturbinensatzes. Ein Teil des Dampfes wird der Dampfturbine entnommen und dem Niederdruck- und/oder Hochdruckspeisewasservorwärmer zugeführt, was in Fig. 1 durch die im Hochdruck (HD) -Teil und im Mittelteil der Stufen MD, ND abgehenden Pfeile angedeutet ist. Der Dampfturbinensatz treibt einen Generator 10.3 an, das Abwärmepotential des expandierten Dampfes wird in einem Kondensator niedergeschlagen.

### Bezugszeichenliste

- 1: Kohlevergasungseinrichtung
- 2: CES-Brenner (Gasverbrennungseinrichtung)
- 3: Heißgasexpander
- 4: Dampferzeuger
- 5: Entschwefelungseinrichtung
- 6: Rauchgaskondensator
- 7: CO₂-/H₂O-Kompressor
- 8: Ammoniak-Expander
- 10: Generator
- 11: Kondensator
- 100: Abscheideflasche

- AHK: Abhitzekessel
- As: Asche
- HD: erste Stufe des Turbinensatzes (Hochdruckteil)
- K: Kohle
- M: Regelbares Drosselventil
- MD: zweite Stufe des Turbinensatzes (Mitteldruckteil)
- ND: dritte Stufe des Turbinensatzes (Niederdruckteil)
- RG: Rauchgas
- W: (Speise)Wasser
- ZÜ: Zwischenüberhitzer
- SPW: Speisewasser
- E: SPW-Einspritzung zur Dampftemperatur-Regelung

## Patentansprüche

1. Kraftwerk mit
einer Kohlevergasungseinrichtung (1) zum Vergasen von Kohle (K), insbesondere zur Quenchung mit einer Wassereindüsung (W);
einer Gasverbrennungseinrichtung, insbesondere einem CES-Brenner (2), zur Verbrennung von, insbesondere gereinigtem, Synthesegas aus der Kohlevergasungseinrichtung (1);
einem Heißgasexpander (3) zur Erzeugung von nutzbarer Abtriebsleistung unter Expansion von Rauchgas (RG) aus der Gasverbrennungseinrichtung; einem Dampferzeuger, insbesondere ein Abhitze-Dampferzeuger, (4) zur Erwärmung, insbesondere zur Verdampfung und/oder Überhitzung von Speisewasser (W) durch Abwärme des expandierten Rauchgases;
einem Dampfturbinensatz mit wenigstens einer ersten Stufe (HD) zur Entspannung von Dampf, insbesondere Hochdruck-Dampf, aus dem Dampferzeuger; und
einem Zwischenüberhitzer (ZÜ), der nach der ersten Stufe des Dampfturbinensatzes angeordnet ist und von dem expandierten Rauchgas durchströmt wird; **gekennzeichnet durch**
eine Drosseleinrichtung nach dem Zwischenüberhitzer und/oder einer Dampfentnahme vor dem Hochdruck (HD) -Teil mit einem Umformventil.

2. Kraftwerk nach Anspruch 1, **dadurch gekennzeichnet, dass** der Dampfturbinensatz eine zweite Stufe (MD) zur weiteren Entspannung von Dampf aus der ersten Stufe aufweist, wobei der Zwischenüberhitzer und/oder die Drosseleinrichtung zwischen der ersten und zweiten Stufe des Dampfturbinensatzes angeordnet ist.

3. Kraftwerk nach einem der vorhergehenden Ansprüche, **dadurch gekennzeichnet, dass** der Dampferzeuger (4) und der Zwischenüberhitzer (ZÜ) in einem Abhitzekessel (AHK) integriert sind.

4. Kraftwerk nach einem der vorhergehenden Ansprüche, **gekennzeichnet durch** eine Entschwefelungseinrichtung (5) zur Entschwefelung des expandierten Rauchgases nach dem Abhitzekessel.

5. Kraftwerk nach Anspruch 4, **gekennzeichnet durch** einen Kühl-Kompressor (7.1) zum Komprimieren von Kohlendioxid-Gas aus der Entschwefelungseinrichtung, der mit dem Heißgasexpander verbunden ist.

6. Kraftwerk nach Anspruch 5, **gekennzeichnet durch** einen Rauchgaskondensator (6) zur Kondensation von Rauchgas, der zwischen der Entschwefelungseinrichtung (5) und dem Kohlendioxid-Kompressor (7.1) angeordnet ist.

7. Kraftwerk nach Anspruch 6, **gekennzeichnet durch** einen Kältemittel-Expander (8), der mit dem Rauchgaskondensator (6) verbunden ist.

8. Kraftwerk nach einem der vorhergehenden Ansprüche, **gekennzeichnet durch** eine Sauerstoff-Zufuhr, insbesondere mit einem Kompressor und/oder einer Luftzerlegungsanlage, die mit der Kohlevergasungseinrichtung (1) und/oder der Gasverbrennungseinrichtung (2) verbunden ist.

9. Verwendung eines Dampfturbinensatzes in einem Kraftwerk nach einem der vorhergehenden Ansprüche.

10. Verwendung eines Kühl-Kompressors in einem Kraftwerk nach Anspruch 5.

11. Verwendung eines Kältemittel-Expanders in einem Kraftwerk nach Anspruch 7.

12. Verwendung eines Luft- oder Sauerstoff-Kompressors in einem Kraftwerk nach Anspruch 8.

13. Verfahren zur Erzeugung von nutzbarer Abtriebsleistung durch ein Kraftwerk nach einem der vorhergehenden Ansprüche, mit den Schritten:
Vergasen von Kohle in der Kohlevergasungseinrichtung (1);
Verbrennung von Synthesegas aus der Kohlevergasungseinrichtung in der Gasverbrennungseinrichtung (2);
Erzeugung von nutzbarer Abtriebsleistung in dem Heißgasexpander (3) unter Expansion von Rauchgas (RG) aus der Gasverbrennungseinrichtung;
Erwärmung, insbesondere Verdampfung und/oder Überhitzung, von Speisewasser (SPW) in dem Dampferzeuger (4) durch Abwärme des expandierten Rauchgases;
Entspannung von Dampf aus dem Dampferzeuger in der ersten Stufe (HD) des Dampfturbinensatzes;und
Zwischenüberhitzung des Dampfes in dem Zwischenüberhitzer (ZÜ) durch das expandierte Rauchgas;
**gekennzeichnet durch**
eine Drosselung des Dampfes in der Drosseleinrichtung nach dem Zwischenüberhitzer und/oder einer Dampfentnahme vor dem Hochdruck (HD) -Teil mit einem Umformventil.

14. Verfahren nach Anspruch 13, **dadurch gekennzeichnet, dass** Dampf aus der ersten Stufe des Dampfturbinensatzes in einer zweiten Stufe (MD) entspannt wird, und dass Dampf in der Drosseleinrichtung zwischen dem Zwischenüberhitzer im Abhitzekessel und der zweiten Stufe des Dampfturbinensatzes gedrosselt wird.

15. Verfahren nach Anspruch 13 bis 14, **dadurch gekennzeichnet, dass** Dampf vor der ersten Stufe des Dampfturbinensatzes (Hochdruck-Teil) entnommen und mittels Umformventil auf den Zustand der kalten Zwischenüberhitzer-Schiene reduziert wird.

16. Verfahren nach einem der vorhergehenden Ansprüche 13 bis 15, **gekennzeichnet durch** eine Entschwefelung des expandierten Rauchgases nach dem Abhitzekessel "b" in einer Entschwefelungseinrichtung (5).

17. Verfahren nach einem der vorhergehenden Ansprüche 13 bis 16, **gekennzeichnet durch** ein Komprimieren von Kohlendioxid-Gas aus einem Rauchgaskondensator (6) **durch** einen Kühl-Kompressor (7.1), und Kühlen des Heißgasexpanders mittels Kohlendioxid-Gas aus dem Kühl-Kompressor und **durch** Komprimieren des restlichen CO₂-Gases für Enhanced Oil Recovery.

18. Verfahren nach einem der vorhergehenden Ansprüche 13 bis 17, **gekennzeichnet durch** ein Komprimieren von Luft **durch** einen Kompressor zur Erzeugung von Sauerstoff, der mit der Kohlevergasungseinrichtung und/oder der Gasverbrennungseinrichtung verbunden ist, und ein Beschicken der Kohlevergasungseinrichtung und/oder der Gasverbrennungseinrichtung mit Sauerstoff.
